# EUROPEAN PATENT APPLICATION

(11) **EP 3 252 609 A1**
(43) Date of publication of application: **06.12.2017**
(21) Application number: 15884413.4
(22) Date of filing: 26.11.2015
(51) Int. Cl.: G06F 12/08

(54) **CACHE DATA DETERMINATION METHOD AND DEVICE**

(30) Priority: 11.03.2015 CN 201510105461
(71) Applicant: Huawei Technologies Co. Ltd., Shenzhen, Guangdong 518129 (CN)
(72) Inventor: CHAI, Yunpeng, Beijing 100872 (CN); SUN, Dongwang, Shenzhen Guangdong 518129 (CN)
(74) Representative: Thun, Clemens
(86) International application number: PCT/CN2015/095608
(87) International publication number: WO 2016/141735

(57) **Abstract**

The present invention discloses a cache data determining method and apparatus, and pertains to the field of computer technologies. The method includes: acquiring a data identifier of read cache miss data; selecting, based on the acquired data identifier, a data identifier of to-be-determined data; recording data identifiers by groups; collecting statistics on quantities of occurrence times, in each group, of the data identifiers; and selecting target to-be-determined data according to the quantities of occurrence times, and determining the target to-be-determined data as cache miss data to be written into a cache memory. Data identifiers are recorded by groups, and after statistics on quantities of occurrence times, in each group, of the data identifiers is collected, target to-be-determined data is selected according to the quantities of occurrence times, and the target to-be-determined data is determined as cache miss data to be written into a cache memory. Because a large quantity of occurrence times can indicate that cache miss data is read for relatively many times. Therefore, good data having a large quantity of read times can be selected, so that a proportion of good data stored in the cache memory can be improved, and further, a hit rate of subsequent data reading can be improved.

## Description

### FIELD OF THE INVENTION

The present invention relates to the field of computer technologies, and in particular, to a cache data determining method and apparatus.

### BACKGROUND OF THE INVENTION

In a process in which a processor of a computer processes data, because a speed of reading data from a cache memory by the processor is higher than a speed of reading data from a magnetic disk, to speed up data processing, as a data processing process proceeds, the processor continuously selects good data more frequently accessed, and stores a copy of such good data in the cache memory. On this basis, when the processor processes data, if required data has already been stored in the cache memory, the processor directly reads the data from the cache memory, where the data is cache hit data; if the required data has not yet been stored in the cache memory, the processor reads the required data from the magnetic disk, where the data is cache miss data. To speed up data processing, data more frequently accessed in the cache miss data may be written into the cache memory, to ensure that when the data is needed subsequently, the processor can directly read the data from the cache memory. However, some cache memories, for example, an SSD (Solid State Disk, solid state disk), have a limited quantity of write times, and frequently writing data into such cache memories shortens a service life of the cache memories. Therefore, before data is written into the cache memories, it is necessary to determine, from all the cache miss data, cache miss data that can be written into the cache memories.

In related technologies, when it is determined which cache miss data can be written into a cache memory, a method generally used is: randomly selecting a part of cache miss data from all cache miss data, and using the selected cache miss data as cache miss data that can be written into the cache memory.

During implementation of the present invention, the inventor finds that the related technologies have at least the following problem.

The cache miss data is classified into good data more frequently accessed, medium data moderately accessed, and poor data less frequently accessed. In the related technologies, when cache miss data is determined, the cache miss data is only randomly selected. Therefore, probabilities that the good data, the medium data, and the poor data are selected are equal, so that proportions of good data, medium data, and poor data that are written into the cache memory are equal, resulting in that a hit rate is not high when a processor subsequently reads data from the cache memory.

### SUMMARY

To increase a proportion of good data having a relatively large quantity of access times and stored in a cache memory, and thereby increase a hit rate when a processor subsequently reads data from the cache memory, embodiments of the present invention provide a cache data determining method and apparatus. The technical solutions are as follows:

According to a first aspect, a cache data determining method is provided, where the method includes:
acquiring a data identifier of read cache miss data, where the data identifier is used to differentiate different cache miss data;
selecting, based on the acquired data identifier of the cache miss data, a data identifier of to-be-determined data;
recording data identifiers of to-be-determined data by groups;
collecting statistics on quantities of occurrence times, in each group, of the data identifiers of the to-be-determined data; and
selecting target to-be-determined data according to the quantities of occurrence times, and determining the target to-be-determined data as cache miss data to be written into a cache memory.

With reference to the first aspect, in a first possible implementation manner of the first aspect, each group constitutes a time window sequence, where the time window sequence includes at least two time windows, each time window includes a first preset quantity of first storage units, and there are a second preset quantity of second storage units between every two time windows;
the recording data identifiers of to-be-determined data by groups includes:
sequentially recording the data identifiers of the to-be-determined data respectively into first storage units in the time window sequence; and
the collecting statistics on quantities of occurrence times, in each group, of the data identifiers of the to-be-determined data includes:
   collecting statistics on quantities of occurrence times, in each time window of the time window sequence, of the data identifiers of the to-be-determined data.

With reference to the first possible implementation manner of the first aspect, in a second possible implementation manner of the first aspect, the collecting statistics on quantities of occurrence times, in each time window of the time window sequence, of the data identifiers of the to-be-determined data includes:
collecting statistics on a quantity of first storage units, in each time window of the time window sequence, that record a same data identifier; and
determining, according to the quantity of the first storage units that record a same data identifier, the quantities of occurrence times, in each time window of the time window sequence, of the data identifiers of the to-be-determined data.

With reference to the second possible implementation manner of the first aspect, in a third possible implementation manner of the first aspect, the collecting statistics on a quantity of first storage units, in each time window of the time window sequence, that record a same data identifier includes:
when all first storage units in the time window sequence are filled, collecting statistics on the quantity of the first storage units, in each time window of the time window sequence, that record a same data identifier.

With reference to the second possible implementation manner of the first aspect, in a fourth possible implementation manner of the first aspect, after the collecting statistics on a quantity of first storage units, in each time window of the time window sequence, that record a same data identifier, the method further includes:
clearing the data identifiers stored in the first storage units in the time window sequence, so as to record, by using the time window sequence, a data identifier that is of to-be-determined data and is selected in a subsequent data reading process.

With reference to any possible implementation manner of the first aspect to the fourth possible implementation manner of the first aspect, in a fifth possible implementation manner of the first aspect, the selecting target to-be-determined data according to the quantities of occurrence times, and determining the target to-be-determined data as cache miss data to be written into a cache memory includes:
selecting to-be-determined data whose quantity of occurrence times is not less than a preset threshold, using the to-be-determined data whose quantity of occurrence times is not less than the preset threshold as target to-be-determined data, and determining the target to-be-determined data as the cache miss data to be written into the cache memory.

With reference to any possible implementation manner of the first aspect to the fifth possible implementation manner of the first aspect, in a sixth possible implementation manner of the first aspect, after the determining the target to-be-determined data as cache miss data to be written into a cache memory, the method further includes:
adding a data identifier of the target to-be-determined data to a preset whitelist, where the preset whitelist includes a fourth preset quantity of third storage units, and each third storage unit may record one data identifier of to-be-determined data; and
when subsequently read cache miss data hits target to-be-determined data corresponding to any one data identifier in the preset whitelist, writing the hit target to-be-determined data into the cache memory.

With reference to the sixth possible implementation manner of the first aspect, in a seventh possible implementation manner of the first aspect, the writing the hit target to-be-determined data into the cache memory includes:
when storage space of the cache memory is not full, directly writing, according to a data size of the hit target to-be-determined data, the hit target to-be-determined data into the cache memory; and
when the storage space of the cache memory is full, evicting, according to a preset cache replacement algorithm, data stored in storage space with a size equal to the data size in the cache memory, and writing the hit target to-be-determined data to a storage location corresponding to the evicted data.

According to a second aspect, a cache data determining apparatus is provided, where the apparatus includes:
an acquiring module, configured to acquire a data identifier of read cache miss data, where the data identifier is used to differentiate different cache miss data;
a selecting module, configured to select, based on the acquired data identifier of the cache miss data, a data identifier of to-be-determined data;
a recording module, configured to record data identifiers of to-be-determined data by groups;
a statistics collecting module, configured to collect statistics on quantities of occurrence times, in each group, of the data identifiers of the to-be-determined data; and
a determining module, configured to select target to-be-determined data according to the quantities of occurrence times, and determine the target to-be-determined data as cache miss data to be written into a cache memory.

With reference to the second aspect, in a first possible implementation manner of the second aspect, each group constitutes a time window sequence, where the time window sequence includes at least two time windows, each time window includes a first preset quantity of first storage units, and there are a second preset quantity of second storage units between every two time windows;
the recording module is configured to sequentially record the data identifiers of the to-be-determined data respectively into first storage units in the time window sequence; and
the statistics collecting module is configured to collect statistics on quantities of occurrence times, in each time window of the time window sequence, of the data identifiers of the to-be-determined data.

With reference to the first possible implementation manner of the second aspect, in a second possible implementation manner of the second aspect, the statistics collecting module includes:
a statistics collecting unit, configured to collect statistics on a quantity of first storage units, in each time window of the time window sequence, that record a same data identifier; and
a first determining unit, configured to determine, according to the quantity of the first storage units that record a same data identifier, the quantities of occurrence times, in each time window of the time window sequence, of the data identifiers of the to-be-determined data.

With reference to the second possible implementation manner of the second aspect, in a third possible implementation manner of the second aspect, the statistics collecting unit is configured to: when all first storage units in the time window sequence are filled, collect statistics on the quantity of the first storage units, in each time window of the time window sequence, that record a same data identifier.

With reference to the second possible implementation manner of the second aspect, in a fourth possible implementation manner of the second aspect, the statistics collecting module further includes:
a clearing unit, configured to clear the data identifiers stored in the first storage units in the time window sequence, so as to record, by using the time window sequence, a data identifier that is of to-be-determined data and is selected in a subsequent data reading process.

With reference to any possible implementation manner of the second aspect to the fourth possible implementation manner of the second aspect, in a fifth possible implementation manner of the second aspect, the determining module is configured to select to-be-determined data whose quantity of occurrence times is not less than a preset threshold as target to-be-determined data, and determine the target to-be-determined data as the cache miss data to be written into the cache memory.

With reference to any possible implementation manner of the second aspect to the fifth possible implementation manner of the second aspect, in a sixth possible implementation manner of the second aspect, the apparatus further includes:
an adding module, configured to add a data identifier of the target to-be-determined data to a preset whitelist, where the preset whitelist includes a fourth preset quantity of third storage units, and each third storage unit may record one data identifier of to-be-determined data; and
a writing module, configured to: when subsequently read cache miss data hits target to-be-determined data corresponding to any one data identifier in the preset whitelist, write the hit target to-be-determined data into the cache memory.

With reference to the sixth possible implementation manner of the second aspect, in a seventh possible implementation manner of the second aspect, the writing module is configured to:
when storage space of the cache memory is not full, directly write, according to a data size of the hit target to-be-determined data, the hit target to-be-determined data into the cache memory; and
when the storage space of the cache memory is full, evict, according to a preset cache replacement algorithm, data stored in storage space with a size equal to the data size in the cache memory, and write the hit target to-be-determined data to a storage location corresponding to the evicted data.

The technical solutions provided in the embodiments of the present invention bring the following beneficial effects:

Data identifiers of to-be-determined data are recorded by groups, and after statistics on quantities of occurrence times, in each group, of the data identifiers of the to-be-determined data is collected, target to-be-determined data is selected according to the quantities of occurrence times, and the target to-be-determined data is determined as cache miss data to be written into a cache memory. Because a large quantity of occurrence times can indicate that cache miss data is read for relatively many times, good data that is read for many times can be selected from read cache miss data, so that a proportion of good data stored in the cache memory can be improved, and further, a hit rate when a processor subsequently reads data from the cache memory can be improved.

### BRIEF DESCRIPTION OF THE DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a system architecture diagram related to a cache data determining method according to an embodiment of the present invention;
FIG. 2 is a flowchart of a cache data determining method according to another embodiment of the present invention;
FIG. 3 is a flowchart of a cache data determining method according to another embodiment of the present invention;
FIG. 4 is a schematic diagram of a time window sequence according to another embodiment of the present invention;
FIG. 5 is a schematic structural diagram of a cache data determining apparatus according to another embodiment of the present invention; and
FIG. 6 is a schematic structural diagram of a cache data determining apparatus according to another embodiment of the present invention.

### DETAILED DESCRIPTION OF THE EMBODIMENTS

To make the objectives, technical solutions, and advantages of the present invention clearer, the following further describes the embodiments of the present invention in detail with reference to the accompanying drawings.

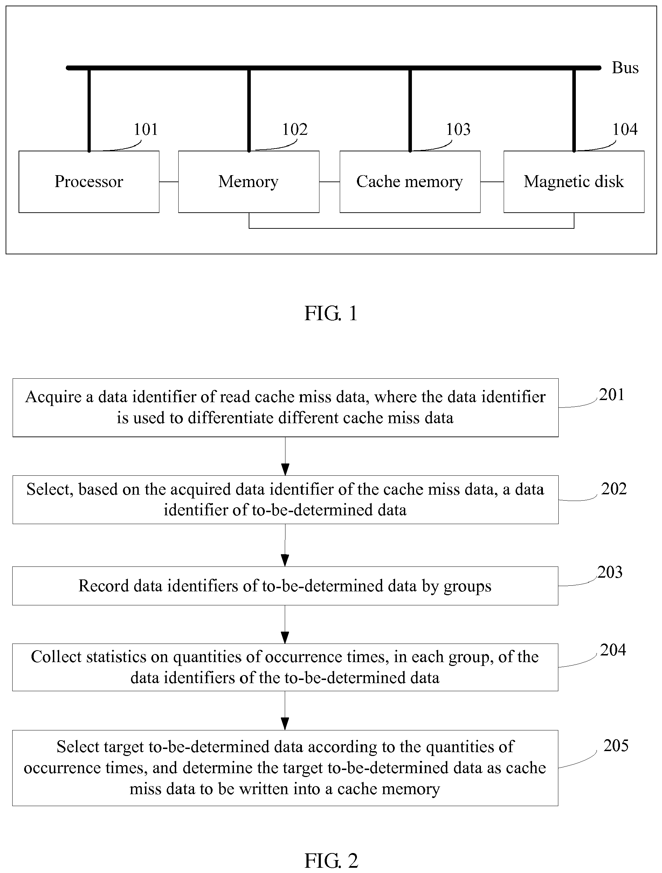

As shown in FIG. 1, FIG. 1 shows a system architecture diagram related to a cache data determining method according to an embodiment of the present invention. As shown in FIG. 1, the system architecture includes a processor 101, a memory 102, a cache memory 103, and a magnetic disk 104. Data required by the processor 101 may be stored in these three storage media: the memory 102, the cache memory 103, and the magnetic disk 104. Medium access speeds of these three storage media are sequenced as follows: the memory 102 > the cache memory 103 > the magnetic disk 104, and capacity sizes are sequenced as follows: the memory 102 < the cache memory 103 < the magnetic disk 104. In consideration of costs, the memory 102 and the cache memory 103 are usually used as a level 1 cache and a level 2 cache respectively to speed up data processing. Specifically, the processor 101 generally uses a DMA (Direct Memory Access, direct memory access) technology when reading data, that is, when reading data from the cache memory 103 or the magnetic disk 104, the processor 101 first reads the data into the memory 102, and then reads the data from the memory 102. That means, when reading data, the processor 101 first reads the data from the memory 102; if the required data does not exist in the memory 102, the required data is read from the cache memory 103; and if the required data still does not exist in the cache memory 103, the data is then read from the magnetic disk 104.

In this embodiment of the present invention, a cache data determining method is proposed for a case in which data required by the processor 101 does not exist in the memory 102, and the processor 101 needs to read the data from the cache memory 103 or the magnetic disk 104. Specifically, a speed of reading data from the cache memory 103 by the processor 101 is higher than a speed of reading data from the magnetic disk 104; therefore, as a data processing process proceeds, the processor 101 stores a copy of good data more frequently accessed in the cache memory 103, so that during subsequent data reading, the processor 101 can directly read such data from the cache memory 103, without a need of accessing the magnetic disk 104 again. For ease of description, in this embodiment of the present invention, data that has been stored in the cache memory 103 is defined as cache hit data, and data that has not been stored in the cache memory 103 and needs to be read from the magnetic disk 104 by the processor 103 is defined as cache miss data.

In addition, some cache memories 103, for example, an SSD, have a limited quantity of write times. If data written into a cache memory 103 of this type is data less frequently accessed, that is, the data is not data that is frequently needed by the processor 101, in this case the processor 101 may be unable to acquire required data from the cache memory 103 subsequently, that is, a cache hit rate is not high. In this case, to improve the cache hit rate, data that has been cached in the cache memory 103 is replaced to evict the data less frequently accessed, and new data is further re-written into the cache memory 103. Such a data replacement operation causes data in the cache memory 103 to be frequently updated. However, if a quantity of write times of the cache memory 103 is limited, frequent data update shortens a service life of the cache memory 103. To sum up, when data is written into the cache memory 103 of this type, it should be ensured that there is a relatively high proportion of good data more frequently accessed in the written cache miss data, so as to avoid that a service life of the cache memory 103 of this type is shortened due to frequent data update.

With reference to the foregoing content, before data is written into the cache memory 103 of this type, it is required to determine, from all cache miss data, cache miss data that can be written into the cache memory 103 of this type, so as to improve a proportion of good data in the cache memory 103, and further improve a hit rate when the processor 101 reads data from the cache memory 103. For details about a specific cache data determining method, reference may be made to embodiments described below.

With reference to the schematic system architecture diagram shown in FIG. 1, FIG. 2 is a flowchart of a cache data determining method according to an embodiment of the present invention. As shown in FIG. 2, a process of the method provided in this embodiment of the present invention includes:
201: Acquire a data identifier of read cache miss data, where the data identifier is used to differentiate different cache miss data.
202: Select, based on the acquired data identifier of the cache miss data, a data identifier of to-be-determined data.
203: Record data identifiers of to-be-determined data by groups.
204: Collect statistics on quantities of occurrence times, in each group, of the data identifiers of the to-be-determined data.

In another embodiment, each group constitutes a time window sequence, where the time window sequence includes at least two time windows, each time window includes a first preset quantity of first storage units, and there are a second preset quantity of second storage units between every two time windows.

The recording data identifiers of to-be-determined data by groups includes:
sequentially recording the data identifiers of the to-be-determined data respectively into first storage units in the time window sequence.

The collecting statistics on quantities of occurrence times, in each group, of the data identifiers of the to-be-determined data includes:
collecting statistics on quantities of occurrence times, in each time window of the time window sequence, of the data identifiers of the to-be-determined data.

In another embodiment, the collecting statistics on quantities of occurrence times, in each time window of the time window sequence, of the data identifiers of the to-be-determined data includes:
collecting statistics on a quantity of first storage units, in each time window of the time window sequence, that record a same data identifier; and
determining, according to the quantity of the first storage units that record a same data identifier, the quantities of occurrence times, in each time window of the time window sequence, of the data identifiers of the to-be-determined data.

In another embodiment, the collecting statistics on a quantity of first storage units, in each time window of the time window sequence, that record a same data identifier includes:
when all first storage units in the time window sequence are filled, collecting statistics on the quantity of the first storage units, in each time window of the time window sequence, that record a same data identifier.

In another embodiment, after the collecting statistics on a quantity of first storage units, in each time window of the time window sequence, that record a same data identifier, the method further includes:
clearing the data identifiers stored in the first storage units in the time window sequence, so as to record, by using the time window sequence, a data identifier that is of to-be-determined data and is selected in a subsequent data reading process.

205: Select target to-be-determined data according to the quantities of occurrence times, and determine the target to-be-determined data as cache miss data to be written into a cache memory.

In another embodiment, the selecting target to-be-determined data according to the quantities of occurrence times, and determining the target to-be-determined data as cache miss data to be written into a cache memory includes:
selecting to-be-determined data whose quantity of occurrence times is not less than a preset threshold, using the to-be-determined data whose quantity of occurrence times is not less than the preset threshold as target to-be-determined data, and determining the target to-be-determined data as the cache miss data to be written into the cache memory.

In another embodiment, after the selecting target to-be-determined data according to the quantities of occurrence times, and determining the target to-be-determined data as cache miss data to be written into a cache memory, the method further includes:
adding a data identifier of the target to-be-determined data to a preset whitelist, where the preset whitelist includes a fourth preset quantity of third storage units, and each third storage unit may record one data identifier of to-be-determined data; and
when subsequently read cache miss data hits target to-be-determined data corresponding to any one data identifier in the preset whitelist, writing the hit target to-be-determined data into the cache memory.

In another embodiment, the writing the hit target to-be-determined data into the cache memory includes:
when storage space of the cache memory is not full, directly writing, according to a data size of the hit target to-be-determined data, the hit target to-be-determined data into the cache memory; and
when the storage space of the cache memory is full, evicting, according to a preset cache replacement algorithm, data stored in storage space with a size equal to the data size in the cache memory, and writing the hit target to-be-determined data to a storage location corresponding to the evicted data.

According to the method provided in this embodiment of the present invention, data identifiers of to-be-determined data are recorded by groups, and after statistics on quantities of occurrence times, in each group, of the data identifiers of the to-be-determined data is collected, target to-be-determined data is selected according to the quantities of occurrence times, and the target to-be-determined data is determined as cache miss data to be written into a cache memory. Because a large quantity of occurrence times can indicate that cache miss data is read for relatively many times, good data that is read for many times can be selected from read cache miss data, so that a proportion of good data stored in the cache memory can be improved, and further, a hit rate when a processor subsequently reads data from the cache memory can be improved.

All the foregoing alternative technical solutions may be used in any combination to form an alternative embodiment of the present invention, and the alternative embodiment is not described herein again.

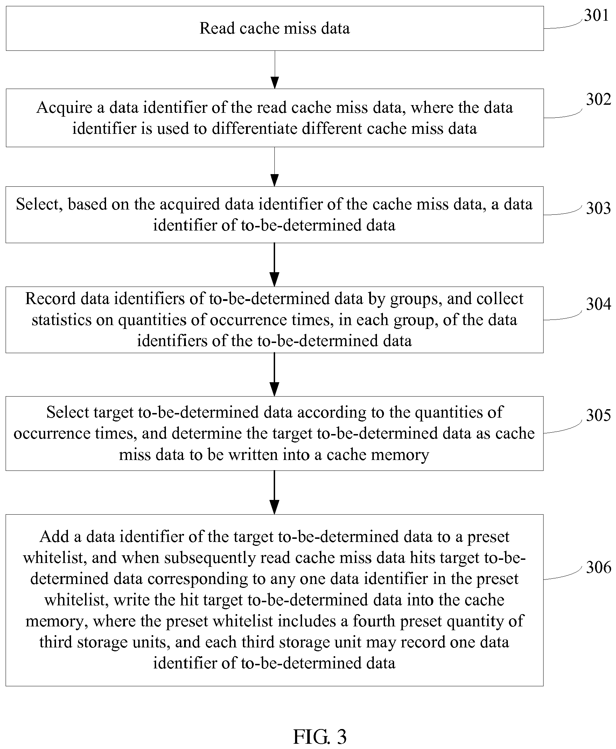

With reference to the schematic diagram of the system architecture shown in FIG. 1 and the content of the embodiment shown in FIG. 2, FIG. 3 is a flowchart of a cache data determining method according to an exemplary embodiment of the present invention. As shown in FIG. 3, a process of the method provided in this embodiment of the present invention includes:
301: Read cache miss data.

With reference to the system architecture diagram shown in FIG. 1, when data required by a processor is not stored in a memory or a cache memory, the processor needs to read the data from a magnetic disk. Data that is read by the processor from the magnetic disk is cache miss data. However, in all cache miss data that is read by the processor, some cache miss data may be good data that is needed by the processor for relatively many times. Such good data may be written into the cache memory, so that the processor reads the good data directly from the cache memory subsequently, thereby improving a data processing speed. Therefore, after the processor reads the cache miss data, the processor is triggered to determine whether to write the cache miss data into the cache memory.

302: Acquire a data identifier of the read cache miss data, where the data identifier is used to differentiate different cache miss data.

The data identifier may be used to differentiate different cache miss data, that is, one piece of cache miss data is corresponding to one data identifier.

In this embodiment of the present invention, to reduce system resources in a process of determining cache data, when the cache data is determined, processing may be performed on only a data identifier of the cache data. Therefore, after the cache miss data is read, the data identifier of the read cache miss data may be acquired.

Each piece of cache miss data may carry a data identifier corresponding to the piece of cache miss data. On this basis, when a data identifier of read cache miss data is acquired, parsing may be performed on each piece of cache miss data to obtain a data identifier of the piece of cache miss data.

Specifically, when a data identifier of read cache miss data is acquired, it may be that each time when one piece of cache miss data is read, a data identifier of the piece of cache miss data is acquired once; or it may be that after some pieces of cache miss data are read, data identifiers of these pieces of cache miss data are acquired once. In addition, the process of determining cache miss data may be periodic, for example, the cache miss data is determined once each day, or the cache miss data is determined once each hour. Therefore, when a data identifier of cache miss data is acquired, it may also be that when one period elapses, data identifiers of all read cache miss data in this period are acquired once together.

303: Select, based on the acquired data identifier of the cache miss data, a data identifier of to-be-determined data.

Specifically, after acquiring the data identifier of the read cache miss data, the processor may perform processing on a data identifier of each piece of read cache miss data, so as to determine, according to a processing result, whether to write the piece of cache miss data into the cache memory, or may perform processing on data identifiers of only a part of the read cache miss data, so as to determine, according to a processing result, whether to write the part of the cache miss data into the cache memory. In this embodiment of the present invention, a data identifier that is of cache miss data and needs to be processed is defined as a data identifier of to-be-determined data, that is, in this embodiment of the present invention, it is determined, based on a processing result of the data identifier of the to-be-determined data, whether to write the to-be-determined data into the cache memory.

With reference to the foregoing content, after acquiring the data identifier of the read cache miss data, the processor needs to select, based on the acquired data identifier of the cache miss data, a data identifier of to-be-determined data. Each time when one data identifier of cache miss data is acquired, the processor may determine once whether to determine the data identifier of the cache data as a data identifier of to-be-determined data; or, after acquiring a quantity of data identifiers of cache miss data, the processor may select once, based on the quantity of the data identifiers of the cache miss data, a data identifier of to-be-determined data from the quantity of the data identifiers of the cache miss data; or, when duration for acquiring data identifiers of cache miss data reaches a specific length, the processor may select once, based on the data identifiers of the cache miss data that are acquired within the duration, a data identifier of to-be-determined data from the data identifiers of the cache miss data that are acquired within the duration.

Specifically, an implementation manner in which the processor selects, based on the acquired data identifier of the cache miss data, a data identifier of to-be-determined data includes, but is not limited to, the following two manners:
A first implementation manner: Perform random sampling on the acquired data identifier of the cache miss data, and use each data identifier of cache miss data that is selected by means of sampling as a selected data identifier of to-be-determined data.

Specifically, if the processor determines once, each time when one data identifier of cache miss data is acquired, whether to write the data identifier into the cache memory, load is increased greatly, which further reduces a data processing speed of the processor. To avoid occurrence of such a case, random sampling may be performed on data identifiers of all read cache miss data, and a data identifier of cache miss data that is selected by means of sampling is used as a data identifier of to-be-determined data, and processing is performed on only the data identifier of the to-be-determined data, while processing is not performed on a data identifier of cache miss data that is not selected by means of sampling. In this way, load of the processor is reduced, so as to reduce impact, in the process of determining cache miss data, on a processing speed when the processor processes other data.

When random sampling is performed on the data identifiers of the read cache miss data, and each data identifier of cache miss data that is selected by means of sampling is used as a selected data identifier of to-be-determined data, an implementation manner includes, but is not limited to, the following several manners:
A first manner: Select, at intervals of preset duration by means of sampling, one data identifier of read cache miss data, and use the data identifier of the cache miss data that is selected by means of sampling as a data identifier of to-be-determined data.

A specific value of the preset duration may be set according to experience. For example, the preset duration may be 1 minute, 2 minutes, or 5 minutes.

Specifically, if the processor acquires a data identifier of cache miss data when the preset duration is reached, the data identifier of the cache miss data may be used as a data identifier, selected by means of sampling, of to-be-determined data; if the processor does not acquire a data identifier of cache miss data when the preset duration is reached, the processor may use a data identifier of cache miss data that is acquired next time as a data identifier, selected by means of sampling, of to-be-determined data.

For example, the processor performs sampling once on a data identifier of read cache miss data every 3 minutes, and a start point of timing is 14:20:15. If at 14:23:15, the processor is acquiring a data identifier of cache miss data a, the processor uses the data identifier of the cache miss data a as a data identifier, selected by means of sampling, of to-be-determined data. If at 14:23:15, the processor does not acquire a data identifier of cache miss data, but at 14:23:20, the processor acquires a next data identifier of cache miss data b, the processor uses the data identifier of the cache miss data b as a data identifier, selected by means of sampling, of to-be-determined data.

Certainly, if the processor does not acquire a data identifier of cache miss data when preset duration is reached, it may be determined that no data identifier of to-be-determined data is acquired during this time period, timing continues, and when the preset duration is reached again, a data identifier of to-be-determined data is continued to be selected by means of sampling.

A second manner: Each time after a third preset quantity of data identifiers of cache miss data are acquired, select, by means of sampling, one acquired data identifier of cache miss data, and use the data identifier of the cache miss data that is selected by means of sampling, as a data identifier of to-be-determined data.

A value of the third preset quantity may be set according to a need. For example, the third preset value may be 10, 30, or 50.

Specifically, the processor may collect statistics on a quantity of acquired data identifiers of cache miss data from a start point of timing, and set an initial value of a counting quantity to 0. In a process of acquiring a data identifier subsequently, the processor increases the counting quantity by 1 each time when acquiring one data identifier of cache miss data, and when the counting quantity reaches the third preset quantity, the processor uses a data identifier of cache miss data that is acquired when the third preset quantity is reached as a data identifier, selected by means of sampling, of to-be-determined data.

For example, if the third preset quantity is 10, and the initial value of the counting quantity is 0, and when the counting quantity is increased to 10, the processor is acquiring a data identifier of cache miss data c, the data identifier of the cache miss data c is used as a data identifier, selected by means of sampling, of to-be-determined data.

A third manner: Each time when cache miss data is read, a corresponding random probability is generated. Determine whether the random probability that is generated each time is not greater than a preset probability; and if the random probability that is generated each time is not greater than the preset probability, use a data identifier of cache miss data that is read when the random probability is generated, as a data identifier of to-be-determined data.

Specifically, the preset probability is a preset probability for performing sampling on read cache miss data. For a specific value of the preset probability, this embodiment of the present invention sets no specific limitation thereto. For example, the preset probability may be 0.2 or 0.3.

The random probability may be generated according to a predefined random function. For specific content of the random function, this embodiment of the present invention sets no specific limitation thereto, provided that a value generated by the random function is between 0 and 1.

In one data reading process of reading cache miss data, after a random probability of the data reading process is generated, to determine whether a data identifier of the cache miss data is used as a data identifier of to-be-determined data, the generated probability may be compared with the preset probability, and when the generated probability is not less than the preset probability, the data identifier of the cache miss data that is read when the random probability is generated is used as a data identifier of to-be-determined data.

For example, if a random probability that is generated when cache miss data d is read is 0.13, and the preset probability is 0.2, because the random probability 0.13 that is generated when the cache miss data d is read is less than the preset probability 0.2, a data identifier of the cache miss data d is used as a data identifier of to-be-determined data.

Sampling is performed on pieces of read cache miss data, and processing is performed on a data identifier of to-be-determined data that is selected by means of sampling, while processing is not performed on another data identifier of cache miss data that is not selected by means of sampling. This can avoid that a processor is excessively loaded because processing is performed on data identifiers of all read cache miss data, thereby reducing impact on a data processing speed.

A second implementation manner: Use each acquired data identifier of cache miss data as a data identifier of to-be-determined data.

In this implementation manner, processing is performed on a data identifier that is of cache miss data and that is acquired each time. By using this manner, it can be ensured that identification is performed on each piece of read cache miss data, so that target to-be-determined data that is determined subsequently is more accurate.

304: Record data identifiers of to-be-determined data by groups, and collect statistics on quantities of occurrence times, in each group, of the data identifiers of the to-be-determined data.

In this embodiment of the present invention, to select good data having a relatively large quantity of access times from all cache miss data, data identifiers of to-be-determined data are recorded by groups, and further, statistics on quantities of occurrence times, in each group, of the data identifiers of the to-be-determined data is collected. When a quantity of occurrence times, in each group, of a data identifier of to-be-determined data is relatively large, it indicates that a quantity of access times of the to-be-determined data is relatively large, and the to-be-determined data may be determined as good data. In addition, if only one group is set, it is contingent that a data identifier of to-be-determined data occurs in this group of data for many times; if multiple groups are set, when a data identifier of to-be-determined data occurs in each group for relatively many times, a large quantity of occurrence times caused by an accidental cause can be excluded, thereby ensuring that good data having a relatively large quantity of access times can be selected accurately.

The quantities of occurrence times, in each group, of the data identifiers of the to-be-determined data may indicate different meanings. For example, for a data identifier of to-be-determined data, when a same data identifier of to-be-determined data is not recorded in each group, a quantity of occurrence times, in each group, of the data identifier of the to-be-determined data indicates a quantity of groups in which the data identifier of the to-be-determined data is recorded. When each group may be used to record a same data identifier of to-be-determined data, the quantity of occurrence times, in each group, of the data identifier of the to-be-determined data indicates a sum of occurrence times, in each group, of the data identifier of the to-be-determined data.

Groups may be in many forms, and this embodiment of the present invention sets no specific limitation thereto. When forms of groups are different, manners of recording data identifiers of to-be-determined data by groups and collecting statistics on quantities of occurrence times, in each group, of the data identifiers of the to-be-determined data are also different. For example, each group may constitute a time window sequence, where the time window sequence includes at least two time windows, each time window includes a first preset quantity of first storage units, and there are a second preset quantity of second storage units between every two time windows.

For a specific quantity of time windows included in the time window sequence, this embodiment of the present invention sets no specific limitation thereto. For example, the time window sequence may include three time windows, or may include five time windows. For specific values of the first preset quantity and the second preset quantity, this embodiment of the present invention also sets no limitation thereto. For example, the first preset quantity may be 3, 4, or 5, and the second preset quantity may be 1 or 2. In addition, the first storage unit and the second storage unit may be storage units of different sizes, or may be storage units of a same size, and this embodiment of the present invention also sets no limitation thereto.

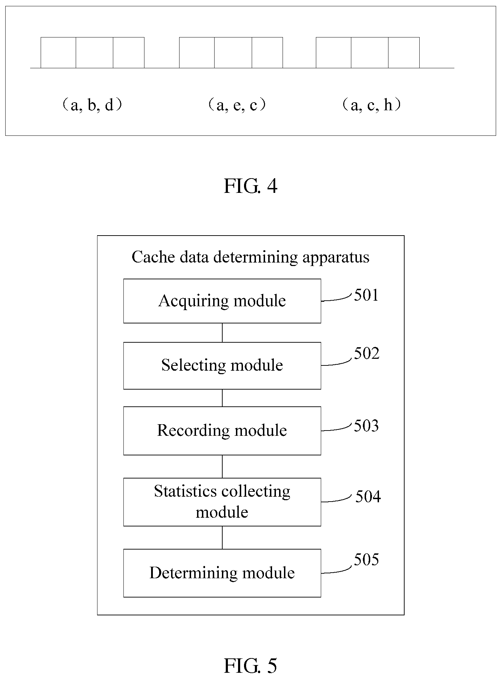

As shown in FIG. 4, FIG. 4 shows a schematic structural diagram of a time window sequence. The time window sequence shown in FIG. 4 includes three time windows, where each time window may store three data identifiers of to-be-determined data, and space between every two time windows is of a same size as a first storage unit that stores one data identifier.

With reference to the foregoing form of the time window sequence, when data identifiers of to-be-determined data are recorded by groups, the data identifiers of the to-be-determined data may be respectively recorded into first storage units in the time window sequence. Specifically, when the data identifiers of the to-be-determined data are respectively recorded into the first storage units in the time window sequence, first storage units in time windows may be filled in sequence according to an arrangement sequence of the time windows in the time window sequence.

For example, with reference to FIG. 4, the first acquired data identifier of to-be-determined data may be recorded into the first storage unit of the first time window, the second acquired data identifier of to-be-determined data may be recorded into the second first storage unit of the first time window, the fourth acquired data identifier of to-be-determined data may be recorded into the first storage unit of the second time window, and so on.

Further, with reference to the foregoing form of the time window sequence, when statistics on the quantities of occurrence times, in each group, of the data identifiers of the to-be-determined data is collected, statistics on quantities of occurrence times, in each time window of the time window sequence, of the data identifiers of the to-be-determined data may be collected.

Specifically, when statistics on the quantities of occurrence times, in each time window of the time window sequence, of the data identifiers of the to-be-determined data is collected, an implementation manner includes, but is not limited to, the following step one and step two:
Step one: Collect statistics on a quantity of first storage units, in each time window of the time window sequence, that record a same data identifier.

Data identifiers of same to-be-determined data are the same, and one data identifier occupies one first storage unit; therefore, a quantity of occurrence times, in the time window sequence, of a same data identifier of to-be-determined data may be determined according to a quantity of first storage units that record the same data identifier. With reference to the content, to determine a quantity of occurrence times, in each time window of the time window sequence, of same to-be-determined data, statistics on a quantity of first storage units, in each time window of the time window sequence, that record a same data identifier needs to be collected first.

Specifically, each process of determining cache miss data may be defined according to whether all the first storage units in the time window sequence are filled. When all the first storage units in the time window sequence are filled, it may be considered that a process of determining cache miss data ends; otherwise, a process of determining cache miss data does not end yet, and a first storage unit that is not occupied still needs to be filled by using a data identifier of to-be-determined data, and when all the first storage units are filled, the process of determining cache miss data ends. Therefore, collecting statistics on the quantity of the first storage units, in each time window of the time window sequence, that record a same data identifier may be implemented when all the first storage units in the time window sequence are filled.

Certainly, it may not be limited to that a process of determining cache miss data ends when all the first storage units are filled, it may also be considered that a process of determining cache miss data ends when an occupancy rate of the first storage units in the time window sequence reaches a preset threshold. This embodiment of the present invention sets no limitation to definition criteria of a process of determining cache miss data. In this case, when the occupancy rate of the first storage units in the time window sequence reaches the preset threshold, statistics on a quantity of first storage units, in each time window of the time window sequence, that record a same data identifier is collected once.

Step two: Determine, according to the quantity of the first storage units that record a same data identifier, the quantities of occurrence times, in each time window of the time window sequence, of the data identifiers of the to-be-determined data.

The quantity of the first storage units that record a same data identifier is a quantity of occurrence times, in the time window sequence, of the data identifier of to-be-determined data. For example, if a quantity of first storage units that record a data identifier of to-be-determined data a is 3, it may indicate that a quantity of occurrence times, in each time window of the time window sequence, of the to-be-determined data a is 3.

When a quantity of access times of one piece of to-be-determined data is relatively large, a data identifier of the piece of to-be-determined data has many opportunities to be recorded in first storage units in the time window sequence. Therefore, good data having a relatively large quantity of access times may be selected according to the quantities of occurrence times, in the time window sequence, of the data identifiers of the to-be-determined data. With reference to FIG. 4, a quantity of occurrence times, in the time window sequence, of a data identifier a of to-be-determined data a is the largest. Therefore, it may be determined that the to-be-determined data a is good data having a relatively large quantity of access times.

Optionally, with reference to the foregoing description of a process of determining cache miss data, when the time window sequence is filled, it may be learned that a process of determining cache miss data ends. In this case, to ensure that the time window sequence may also be used to store a subsequently selected data identifier of to-be-determined data, after statistics on the quantity of the first storage units, in the time window sequence, that store a same data identifier is collected, the data identifiers stored in the first storage units in the time window sequence may be cleared in a timely manner. When clearing is performed, the data identifiers of the to-be-determined data that are written into all the first storage units may be deleted.

In the foregoing manner, good data more frequently accessed can be identified from all to-be-determined data, so that such good data can be written into a cache memory subsequently, while other cache miss data less frequently accessed is not written into the cache memory, which can improve a proportion of good data in the cache memory.

With reference to the foregoing content of the time window sequence, if only one time window is set in the time window sequence, it is contingent that a data identifier of to-be-determined data occurs in this time window for many times; if multiple time windows are set, when a data identifier of to-be-determined data occurs in each time window for relatively many times, a large quantity of occurrence times caused by an accidental cause can be excluded, thereby ensuring that good data having a relatively large quantity of access times can be selected accurately.

305: Select target to-be-determined data according to the quantities of occurrence times, and determine the target to-be-determined data as cache miss data to be written into a cache memory.

To-be-determined data includes good to-be-determined data more frequently accessed, and also includes medium to-be-determined data moderately accessed and poor to-be-determined data less frequently accessed. However, to determine the good to-be-determined data as the cache miss data to be written into the cache memory, the target to-be-determined data may be selected according to a quantity of occurrence times, in each group, of each piece of to-be-determined data, and the target to-be-determined data is determined as the cache miss data to be written into the cache memory.

When the target to-be-determined data is selected according to the quantities of occurrence times, and the target to-be-determined data is determined as the cache miss data to be written into the cache memory, to-be-determined data whose quantity of occurrence times is not less than a preset threshold may be selected as the target to-be-determined data, and the target to-be-determined data is determined as the cache miss data to be written into the cache memory.

Specifically, the preset threshold may be determined according to a quantity of time windows in the time window sequence and whether first storage units in every time window record a same data identifier. If the first storage units in every time window do not record a same data identifier, the preset threshold is not greater than the quantity of time windows. For example, when the quantity of time windows is 5, and first storage units in every time window do not record a same data identifier, the preset threshold may be 3, 4, 5, or the like. If the first storage units in every time window may record a same data identifier, the preset threshold may be greater than the quantity of time windows. For example, when the quantity of time windows is 5, and first storage units in every time window may record a same data identifier, the preset threshold may be 4, 5, 7, 9, or the like.

When the data identifiers of the to-be-determined data are recorded into the first storage units, and the target to-be-determined data is determined according to the quantities of occurrence times, in the first storage units, of the data identifiers, because the data identifiers occupy only quite small storage space, cache miss data that needs to be written into the cache memory can be relatively easily determined without occupying many resources of a processor. In addition, it takes some time to complete a process of collecting statistics on the quantities of occurrence times, in each group, of the data identifiers of the to-be-determined data; therefore, it takes some time to complete a process of determining the cache miss data to be written into the cache memory. Compared with a manner of writing cache miss data into the cache memory each time when the cache miss data is read, this manner can reduce data update frequency of the cache memory, thereby prolonging a service life of the cache memory.

306: Add a data identifier of the target to-be-determined data to a preset whitelist, and when subsequently read cache miss data hits target to-be-determined data corresponding to any one data identifier in the preset whitelist, write the hit target to-be-determined data into the cache memory, where the preset whitelist includes a fourth preset quantity of third storage units, and each third storage unit may record one data identifier of to-be-determined data.

This step is an optional step. After the target to-be-determined data that can be written into the cache memory is determined by performing step 301 to step 305, target to-be-determined data that is hit in a subsequent data reading process may be written into the cache memory by performing this optional step.

With reference to a current storage status of the cache memory, writing the hit target to-be-determined data into the cache memory includes, but is not limited to, the following two cases:
A first case: Storage space of the cache memory is not full.

In this case, the hit target to-be-determined data may be directly written into the cache memory according to a data size of the hit target to-be-determined data. For example, if the data size of the hit target to-be-determined data is 20k, the hit target to-be-determined data may be written into storage space of 20k, in the cache memory, that has not stored data.

A second case: Storage space of the cache memory is full.

In this case, data stored in storage space with a size equal to the data size in the cache memory may be evicted according to a preset cache replacement algorithm, and the hit target to-be-determined data is written to a storage location corresponding to the evicted data.

The preset cache replacement algorithm may be a FIFO (First Input First Output, first in first out) algorithm, an LRU (Least Recently Used) algorithm, or the like. When the preset cache replacement algorithm is the FIFO algorithm, data stored earliest in storage space with a size equal to the data size in the cache memory may be evicted according to the data size of the hit target to-be-determined data, and then the hit target to-be-determined data is written to a storage location corresponding to the evicted data. When the preset cache replacement algorithm is the LRU algorithm, the least recently used data stored in storage space with a size equal to the data size in the cache memory may be evicted according to the data size of the hit target to-be-determined data, and then the hit target to-be-determined data is written to a storage location corresponding to the evicted data.

Certainly, the preset cache replacement algorithm may also be another cache replacement algorithm, and this embodiment of the present invention sets no limitation to specific content of the preset cache replacement algorithm.

When the hit target to-be-determined data is written into the cache memory in this manner, the hit target to-be-determined data may be written into the cache memory without consuming a resource of the processor, so that a process of writing the target to-be-determined data into the cache memory has relatively small impact on a data processing speed of the processor.

Further, when the preset whitelist is full, a part of data in the preset whitelist may be evicted according to the FIFO algorithm or the LRU algorithm, and a subsequently determined data identifier of target to-be-determined data is added to the preset whitelist. In addition, in the preset whitelist, data identifiers may further be sequenced according to a quantity of data identifiers that are acquired in a process of determining cache miss data. On this basis, a part of data identifiers in the preset whitelist may also be evicted according to a quantity of each data identifier. For example, a data identifier whose data identifier quantity is the smallest in the preset whitelist may be evicted.

Certainly, after the target to-be-determined data is determined, this optional step may also be skipped, and the determined target to-be-determined data is directly written into the cache memory, which is not specifically limited in this embodiment of the present invention.

According to the method provided in this embodiment of the present invention, data identifiers of to-be-determined data are recorded by groups, and after statistics on quantities of occurrence times, in each group, of the data identifiers of the to-be-determined data is collected, target to-be-determined data is selected according to the quantities of occurrence times, and the target to-be-determined data is determined as cache miss data to be written into a cache memory. Because a large quantity of occurrence times can indicate that cache miss data is read for relatively many times, good data that is read for many times can be selected from read cache miss data, so that a proportion of good data stored in the cache memory can be improved, and further, a hit rate when a processor subsequently reads data from the cache memory can be improved.

Referring to FIG. 5, this embodiment of the present invention provides a cache data determining apparatus, where the cache data determining apparatus may be used to execute the cache data determining method provided in the embodiment corresponding to the above FIG. 2 or FIG. 3. As shown in FIG. 5, the cache data determining apparatus includes:
an acquiring module 501, configured to acquire a data identifier of read cache miss data, where the data identifier is used to differentiate different cache miss data;
a selecting module 502, configured to select, based on the acquired data identifier of the cache miss data, a data identifier of to-be-determined data;
a recording module 503, configured to record data identifiers of to-be-determined data by groups;
a statistics collecting module 504, configured to collect statistics on quantities of occurrence times, in each group, of the data identifiers of the to-be-determined data; and
a determining module 505, configured to select target to-be-determined data according to the quantities of occurrence times, and determine the target to-be-determined data as cache miss data to be written into a cache memory.

In another embodiment, each group constitutes a time window sequence, where the time window sequence includes at least two time windows, each time window includes a first preset quantity of first storage units, and there are a second preset quantity of second storage units between every two time windows;
the recording module 503 is configured to sequentially record the data identifiers of the to-be-determined data respectively into first storage units in the time window sequence; and
the statistics collecting module 504 is configured to collect statistics on quantities of occurrence times, in each time window of the time window sequence, of the data identifiers of the to-be-determined data.

In another embodiment, the statistics collecting module 504 includes:
a statistics collecting unit, configured to collect statistics on a quantity of first storage units, in each time window of the time window sequence, that record a same data identifier; and
a determining unit, configured to determine, according to the quantity of the first storage units that record a same data identifier, the quantities of occurrence times, in each time window of the time window sequence, of the data identifiers of the to-be-determined data.

In another embodiment, the statistics collecting unit is configured to: when all first storage units in the time window sequence are filled, collect statistics on the quantity of the first storage units, in each time window of the time window sequence, that record a same data identifier.

In another embodiment, the statistics collecting module 504 further includes:
a clearing unit, configured to clear the data identifiers stored in the first storage units in the time window sequence, so as to store, by using the time window sequence, a data identifier that is of to-be-determined data and is selected in a subsequent data reading process.

In another embodiment, the determining module 505 is configured to: select to-be-determined data whose quantity of occurrence times is not less than a preset threshold, use the to-be-determined data whose quantity of occurrence times is not less than the preset threshold as target to-be-determined data, and determine the target to-be-determined data as the cache miss data to be written into the cache memory.

In another embodiment, the apparatus further includes:
an adding module, configured to add a data identifier of the target to-be-determined data to a preset whitelist, where the preset whitelist includes a fourth preset quantity of third storage units, and each third storage unit may record one data identifier of to-be-determined data; and
a writing module, configured to: when subsequently read cache miss data hits target to-be-determined data corresponding to any one data identifier in the preset whitelist, write the hit target to-be-determined data into the cache memory.

In another embodiment, the writing module is configured to:
when storage space of the cache memory is not full, directly write, according to a data size of the hit target to-be-determined data, the hit target to-be-determined data into the cache memory; and
when the storage space of the cache memory is full, evict, according to a preset cache replacement algorithm, data stored in storage space with a size equal to the data size in the cache memory, and write the hit target to-be-determined data to a storage location corresponding to the evicted data.

According to the apparatus provided in this embodiment of the present invention, data identifiers of to-be-determined data are recorded by groups, and after statistics on quantities of occurrence times, in each group, of the data identifiers of the to-be-determined data is collected, target to-be-determined data is selected according to the quantities of occurrence times, and the target to-be-determined data is determined as cache miss data to be written into a cache memory. Because a large quantity of occurrence times can indicate that cache miss data is read for relatively many times, good data that is read for many times can be selected from read cache miss data, so that a proportion of good data stored in the cache memory can be improved, and further, a hit rate when a processor subsequently reads data from the cache memory can be improved.

All the foregoing alternative technical solutions may be used in any combination to form an alternative embodiment of the present invention, and the alternative embodiment is not described herein again.

For the apparatus in the foregoing embodiment, a specific manner of performing an operation by each module has been described in detail in the method embodiment, and is not described in detail herein.

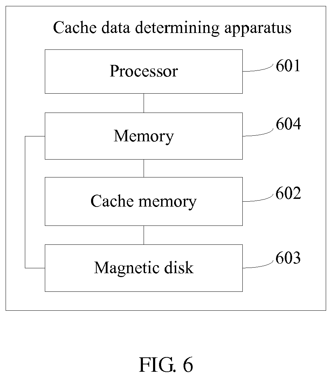

Referring to FIG. 6, this embodiment of the present invention provides a cache data determining apparatus, where the cache data determining apparatus may be used to execute the cache data determining method provided in the embodiment corresponding to the above FIG. 2 or FIG. 3. As shown in FIG. 6, the cache data determining apparatus includes a processor 601, a memory 604, a cache memory 602, and a magnetic disk 603, where:
the magnetic disk 603 is configured to store cache miss data;
the cache memory 602 is configured to store cache hit data;
the memory 604 is configured to store data that is read by the processor 601 from the cache memory 602 or the magnetic disk 603; and
the processor 601 is configured to:
   acquire a data identifier of read cache miss data, where the data identifier is used to differentiate different cache miss data;
   select, based on the acquired data identifier of the cache miss data, a data identifier of to-be-determined data;
   record data identifiers of to-be-determined data by groups;
   collect statistics on quantities of occurrence times, in each group, of the data identifiers of the to-be-determined data; and
   select target to-be-determined data according to the quantities of occurrence times, and determine the target to-be-determined data as cache miss data to be written into the cache memory.

In another embodiment, each group constitutes a time window sequence, where the time window sequence includes at least two time windows, each time window includes a first preset quantity of first storage units, and there are a second preset quantity of second storage units between every two time windows; and
the processor 601 is further configured to:
sequentially record the data identifiers of the to-be-determined data respectively into first storage units in the time window sequence; and
collect statistics on quantities of occurrence times, in each time window of the time window sequence, of the data identifiers of the to-be-determined data.

In another embodiment, the processor 601 is further configured to:
collect statistics on a quantity of first storage units, in each time window of the time window sequence, that record a same data identifier; and
determine, according to the quantity of the first storage units that record a same data identifier, the quantities of occurrence times, in each time window of the time window sequence, of the data identifiers of the to-be-determined data.

In another embodiment, the processor 601 is further configured to:
when all first storage units in the time window sequence are filled, collect statistics on the quantity of the first storage units, in each time window of the time window sequence, that record a same data identifier.

In another embodiment, the processor 601 is further configured to:
clear the data identifiers stored in the first storage units in the time window sequence, so as to record, by using the time window sequence, a data identifier that is of to-be-determined data and is selected in a subsequent data reading process.

In another embodiment, the processor 601 is further configured to:
select to-be-determined data whose quantity of occurrence times is not less than a preset threshold, use the to-be-determined data whose quantity of occurrence times is not less than the preset threshold as target to-be-determined data, and determine the target to-be-determined data as the cache miss data to be written into the cache memory.

In another embodiment, the processor 601 is further configured to:
add a data identifier of the target to-be-determined data to a preset whitelist, where the preset whitelist includes a fourth preset quantity of third storage units, and each third storage unit may record one data identifier of to-be-determined data; and
when subsequently read cache miss data hits target to-be-determined data corresponding to any one data identifier in the preset whitelist, write the hit target to-be-determined data into the cache memory.

In another embodiment, the processor 601 is further configured to:
when storage space of the cache memory is not full, directly write, according to a data size of the hit target to-be-determined data, the hit target to-be-determined data into the cache memory; and
when the storage space of the cache memory is full, evict, according to a preset cache replacement algorithm, data stored in storage space with a size equal to the data size in the cache memory, and write the hit target to-be-determined data to a storage location corresponding to the evicted data.

All the foregoing alternative technical solutions may be used in any combination to form an alternative embodiment of the present invention, and the alternative embodiment is not described herein again.

According to the apparatus provided in this embodiment of the present invention, data identifiers of to-be-determined data are recorded by groups, and after statistics on quantities of occurrence times, in each group, of the data identifiers of the to-be-determined data is collected, target to-be-determined data is selected according to the quantities of occurrence times, and the target to-be-determined data is determined as cache miss data to be written into a cache memory. Because a large quantity of occurrence times can indicate that cache miss data is read for relatively many times, good data that is read for many times can be selected from read cache miss data, so that a proportion of good data stored in the cache memory can be improved, and further, a hit rate when a processor subsequently reads data from the cache memory can be improved.

It needs to be noted that, when the cache data determining apparatus provided in the foregoing embodiment determines cache miss data, the division of the foregoing function modules is merely used as an example for description. In an actual application, the foregoing functions may be allocated to and completed by different function modules, that is, an internal structure of the apparatus is divided into different function modules to complete all or a part of the functions described above. In addition, a conception of the cache data determining apparatus provided in the foregoing embodiment is the same as that of the cache data determining method embodiments, and for a specific implementation process thereof, reference may be made to the method embodiments, and details are not described herein again.

A person of ordinary skill in the art may understand that all or some of the steps of the embodiments may be implemented by hardware or a program instructing related hardware. The program may be stored in a computer-readable storage medium. The storage medium may include: a read-only memory, a magnetic disk, or an optical disc.

The foregoing descriptions are merely exemplary embodiments of the present invention, but are not intended to limit the present invention. Any modification, equivalent replacement, and improvement made without departing from the spirit and principle of the present invention shall fall within the protection scope of the present invention.

## Claims

1. A cache data determining method, wherein the method comprises:
acquiring a data identifier of read cache miss data, wherein the data identifier is used to differentiate different cache miss data;
selecting, based on the acquired data identifier of the cache miss data, a data identifier of to-be-determined data;
recording data identifiers of to-be-determined data by groups;
collecting statistics on quantities of occurrence times, in each group, of the data identifiers of the to-be-determined data; and
selecting target to-be-determined data according to the quantities of occurrence times, and determining the target to-be-determined data as cache miss data to be written into a cache memory.

2. The method according to claim 1, wherein each group constitutes a time window sequence, wherein the time window sequence comprises at least two time windows, each time window comprises a first preset quantity of first storage units, and there are a second preset quantity of second storage units between every two time windows;
the recording data identifiers of to-be-determined data by groups comprises:
sequentially recording the data identifiers of the to-be-determined data respectively into first storage units in the time window sequence; and
the collecting statistics on quantities of occurrence times, in each group, of the data identifiers of the to-be-determined data comprises:
collecting statistics on quantities of occurrence times, in each time window of the time window sequence, of the data identifiers of the to-be-determined data.

3. The method according to claim 2, wherein the collecting statistics on quantities of occurrence times, in each time window of the time window sequence, of the data identifiers of the to-be-determined data comprises:
collecting statistics on a quantity of first storage units, in each time window of the time window sequence, that record a same data identifier; and
determining, according to the quantity of the first storage units that record a same data identifier, the quantities of occurrence times, in each time window of the time window sequence, of the data identifiers of the to-be-determined data.

4. The method according to claim 3, wherein the collecting statistics on a quantity of first storage units, in each time window of the time window sequence, that record a same data identifier comprises:
when all first storage units in the time window sequence are filled, collecting statistics on the quantity of the first storage units, in each time window of the time window sequence, that record a same data identifier.

5. The method according to claim 3, after the collecting statistics on a quantity of first storage units, in each time window of the time window sequence, that record a same data identifier, further comprising:
clearing the data identifiers stored in the first storage units in the time window sequence, so as to record, by using the time window sequence, a data identifier that is of to-be-determined data and is selected in a subsequent data reading process.

6. The method according to any one of claims 1 to 5, wherein the selecting target to-be-determined data according to the quantities of occurrence times, and determining the target to-be-determined data as cache miss data to be written into a cache memory comprises:
selecting to-be-determined data whose quantity of occurrence times is not less than a preset threshold, using the to-be-determined data whose quantity of occurrence times is not less than the preset threshold as target to-be-determined data, and determining the target to-be-determined data as the cache miss data to be written into the cache memory.

7. The method according to any one of claims 1 to 6, after the selecting target to-be-determined data according to the quantities of occurrence times, and determining the target to-be-determined data as cache miss data to be written into a cache memory, further comprising:
adding a data identifier of the target to-be-determined data to a preset whitelist, wherein the preset whitelist comprises a fourth preset quantity of third storage units, and each third storage unit may record one data identifier of to-be-determined data; and
when subsequently read cache miss data hits target to-be-determined data corresponding to any one data identifier in the preset whitelist, writing the hit target to-be-determined data into the cache memory.

8. The method according to claim 7, wherein the writing the hit target to-be-determined data into the cache memory comprises:
when storage space of the cache memory is not full, directly writing, according to a data size of the hit target to-be-determined data, the hit target to-be-determined data into the cache memory; and
when the storage space of the cache memory is full, evicting, according to a preset cache replacement algorithm, data stored in storage space with a size equal to the data size in the cache memory, and writing the hit target to-be-determined data to a storage location corresponding to the evicted data.

9. A cache data determining apparatus, wherein the apparatus comprises:
an acquiring module, configured to acquire a data identifier of read cache miss data, wherein the data identifier is used to differentiate different cache miss data;
a selecting module, configured to select, based on the acquired data identifier of the cache miss data, a data identifier of to-be-determined data;
a recording module, configured to record data identifiers of to-be-determined data by groups;
a statistics collecting module, configured to collect statistics on quantities of occurrence times, in each group, of the data identifiers of the to-be-determined data; and
a determining module, configured to select target to-be-determined data according to the quantities of occurrence times, and determine the target to-be-determined data as cache miss data to be written into a cache memory.

10. The apparatus according to claim 9, wherein each group constitutes a time window sequence, wherein the time window sequence comprises at least two time windows, each time window comprises a first preset quantity of first storage units, and there are a second preset quantity of second storage units between every two time windows;
the recording module is configured to sequentially record the data identifiers of the to-be-determined data respectively into first storage units in the time window sequence; and
the statistics collecting module is configured to collect statistics on quantities of occurrence times, in each time window of the time window sequence, of the data identifiers of the to-be-determined data.

11. The apparatus according to claim 10, wherein the statistics collecting module comprises:
a statistics collecting unit, configured to collect statistics on a quantity of first storage units, in each time window of the time window sequence, that record a same data identifier; and
a determining unit, configured to determine, according to the quantity of the first storage units that record a same data identifier, the quantities of occurrence times, in each time window of the time window sequence, of the data identifiers of the to-be-determined data.

12. The apparatus according to claim 11, wherein the statistics collecting unit is configured to: when all first storage units in the time window sequence are filled, collect statistics on the quantity of the first storage units, in each time window of the time window sequence, that record a same data identifier.

13. The apparatus according to claim 11, wherein the statistics collecting module further comprises:
a clearing unit, configured to clear the data identifiers stored in the first storage units in the time window sequence, so as to record, by using the time window sequence, a data identifier that is of to-be-determined data and is selected in a subsequent data reading process.

14. The apparatus according to any one of claims 9 to 13, wherein the determining module is configured to select to-be-determined data whose quantity of occurrence times is not less than a preset threshold, use the to-be-determined data whose quantity of occurrence times is not less than the preset threshold as target to-be-determined data, and determine the target to-be-determined data as the cache miss data to be written into the cache memory.

15. The apparatus according to any one of claims 9 to 14, wherein the apparatus further comprises:
an adding module, configured to add a data identifier of the target to-be-determined data to a preset whitelist, wherein the preset whitelist comprises a fourth preset quantity of third storage units, and each third storage unit may record one data identifier of to-be-determined data; and
a writing module, configured to: when subsequently read cache miss data hits target to-be-determined data corresponding to any one data identifier in the preset whitelist, write the hit target to-be-determined data into the cache memory.

16. The apparatus according to claim 15, wherein the writing module is configured to:
when storage space of the cache memory is not full, directly write, according to a data size of the hit target to-be-determined data, the hit target to-be-determined data into the cache memory; and
when the storage space of the cache memory is full, evict, according to a preset cache replacement algorithm, data stored in storage space with a size equal to the data size in the cache memory, and write the hit target to-be-determined data to a storage location corresponding to the evicted data.
